# EUROPÄISCHE PATENTANMELDUNG

(11) **EP 2 037 158 A1**
(43) Veröffentlichungstag der Anmeldung: **18.03.2009**
(21) Anmeldenummer: 08015513.8
(22) Anmeldetag: 03.09.2008
(51) Int. Cl.: F16H 61/02

(54) **Verfahren zum Verhindern des Durchdrehens von Antriebsrädern**

(30) Priorität: 17.09.2007 DE 102007044332
(71) Anmelder: LuK Lamellen und Kupplungsbau Beteiligungs KG, 77815 Bühl (DE)
(72) Erfinder: Song, Inho, Ko-Sang-Si 411-730 (KR); Rieger, Christian, 76316 Maisch (DE); Schweizer, Alexander, 77815 Bühl (DE)

(57) **Zusammenfassung**

Verfahren um das Durchdrehen von zumindest einem Antriebsrad zu verhindern, bei einem Kraftfahrzeug, das ein Doppelkupplungsgetriebe aufweist, umfassend die Verfahrensschritte:
- Vorliegen eines Fahrgangs in einem ersten Getriebe des Doppelkupplungsgetriebes;
- Vorliegen eines zum Fahrgang höheren Gang in einem zweiten Getriebe des Doppelkupplungsgetriebes;
- Erkennen, ob das zumindest eine Antriebsrad durchdreht;
- Öffnen der Kupplung, die dem ersten Getriebe zugeordnet ist, in Abhängigkeit davon, ob ein Durchdrehen festgestellt wurde;
- Schließen der Kupplung, die dem zweiten Getriebe zugeordnet ist, in Abhängigkeit davon, ob ein Durchdrehen festgestellt wurde.

## Beschreibung

Die vorliegende Erfindung befasst sich mit einem Verfahren, um zu verhindern, dass ein Antriebsrad eines Kraftfahrzeuges durchdreht.

Beschleunigt ein Fahrzeug auf einer rutschigen Fahrbahn, so kann die Kraft, die von den Reifen auf den Untergrund übertragen werden soll, größer sein, als die Haftreibung zwischen den Reifen und dem Untergrund. Dies führt dazu, dass die Reifen durchdrehen und eine geringere Reibung, die Gleitreibung, zwischen dem Reifen und dem Untergrund entsteht. Dabei kann sich das Fahrzeug für den Fahrer unerwartet verhalten, z.B. nicht in gewohnter Weise beschleunigen.

Dies beeinträchtigt den Fahrkomfort und die Fahrsicherheit.

In der Fahrzeugtechnik sind eine Vielzahl von Verfahren bekannt, die das Durchdrehen der Antriebsräder bei Kraftfahrzeugen, insbesondere bei Autos, verhindern.

Um das Durchdrehen der Antriebsräder zu verhindern, können die Antriebsräder durch eine herkömmliche Traktionskontrolle gebremst werden oder der Fahrer betätigt das Fahrpedal weniger, so dass weniger Kraft vom Antriebsmotor auf die Antriebsräder übertragen wird.

Beide Verfahren bewirken, dass das auf die Räder wirkende Drehmoment verringert wird und so die Kraft, die von den Antriebsrädern auf die Straße übertragen werden soll, kleiner ist als die Reibung zwischen den Reifen und der Straße. Dies führt dazu, dass zwischen Rädern und Untergrund wieder eine Haftreibung herrscht und die Räder nicht mehr durchdrehen.

DE 696 04 654 T2 zeigt ein Steuerverfahren für automatisierte Schaltgetriebe mit einer Einrichtung zur Vermeidung von Radschlupf. Dabei wird vorgeschlagen, den Zustand der geringen Haftung der Räder zu erfassen und eine Mindeständerung des an die Räder übermittelten Motordrehmoments sicherzustellen. Dabei sollen folgende Grundsätze parametrisiert werden: Absenkung des Motordrehmoments vor der Gangumschaltung, Öffnung der Kupplung, Wahl eines weiteren Gangs, Schließen der Kupplung nach der Gangwahl, Wiederherstellung des Motordrehmoments nach der Gangumschaltung und Einkuppeln während des Anfahrens des Fahrzeugs.

Außerdem wird vorgeschlagen bei Stillstand des Fahrzeugs automatisch den Übergang in den zweiten Gang zu bewirken.

DE 698 08 249 offenbart die Erkennung eines rutschigen Untergrundes, die im Wesentlichen auf der Analyse des Gradienten eines für die Geschwindigkeit der angetriebenen Räder repräsentativen Parameters basiert. Diese Analyse erlaubt es, automatisch einen spezifischen Modus zur Steuerung der Übersetzungsverhältnisse zu aktivieren, der an die Haftung der Antriebsräder angepasst ist.

In beiden Verfahren wird dem Fahrer gerade in der Ausnahmesituation, in der ein oder mehrere Antriebsräder durchdrehen, mit dem unerwarteten Verhalten des Fahrzeugs konfrontiert. So wird durch den Schaltvorgang, insbesondere durch das Öffnen der Schaltung, die Momentübertragung auf die Räder unterbrochen und so dem Fahrer eine von ihm nicht gewollte Fahrsituation aufgezwungen.

Es ist eine Aufgabe der vorliegenden Erfindung ein Verfahren bereitzustellen, das bewirkt, dass die Antriebsräder nicht durchdrehen.

Die Aufgabe wird gelöst durch ein Verfahren nach dem unabhängigen Anspruch 1. Bevorzugte Ausführungsformen befinden sich in den Unteransprüchen.

Insbesondere wird die Aufgabe durch ein Verfahren, um zumindest das Durchdrehen eines Antriebsrads eines Kraftfahrzeugs mit Doppelkupplungsgetriebe zu verhindern, gelöst, umfassend die Verfahrensschritte:
Einlegen oder Belassen eines Fahrgangs in einem ersten Getriebe des boppelkupplungsgetriebes;
Einlegen oder Belassens eines zum Fahrgang höheren Gang in einem zweiten Getriebe des Doppelkupplungsgetriebes;
Erkennen, ob zumindest ein Antriebsrad durchdreht;
Öffnen der Kupplung, die dem ersten Getriebe zugeordnet ist, in Abhängigkeit davon, ob ein Durchdrehen festgestellt wurde;
Schließen der Kupplung, die dem zweiten Getriebe zugeordnet ist, in Abhängigkeit davon, ob ein Durchdrehen festgestellt wurde.

Durch die höhere Übersetzung, über die das Antriebsmoment des Fahrzeugmotors an die Antriebsräder übertragen wird, wird das an den Antriebsrädern anliegende Drehmoment verringert. Dies führt dazu, dass die auf die Strasse zu übertragende Kraft kleiner ist als die Gleitreibung und somit die Räder wieder in den Zustand der Haftreibung kommen. Somit verhindert, dass die Antriebsräder weiter durchdrehen.

Da sich jedoch die Umdrehungsgeschwindigkeit der Antriebsräder bei gleichbleibender Drehzahl des Antriebsmotors durch die höhere Übersetzung erhöht, verliert das Fahrzeug keine oder nur wenig an Beschleunigung. Es wird also die Fahrfähigkeit und der Komfort durch den Vorgang, das Durchdrehen der Antriebsräder zu verhindern, kaum beeinträchtigt

Da dies automatisiert geschehen kann, ist kein Eingriff des Fahrzeuglenkers notwendig, sodass der Fahrkomfort durch das automatisierte Wechseln der Übersetzung erhöht wird.

Durch die Verwendung eines Doppelkupplungsgetriebes, das auch ein Mehrfachgetriebe sein kann, kann der Wechsel zwischen den Gängen unterbrechungsfrei gestaltet werden, so dass für den Fahrer keine Unterbrechung der Fahrzeugbeschleunigung zu spüren ist.

In einer bevorzugten Ausführungsform wird zumindest das Durchdrehen eines Antriebsrads durch den Vergleich der Drehgeschwindigkeit des Antriebsrads mit der Drehgeschwindigkeit eines nicht direkt vom Fahrzeugmotor angetriebenen Rads ermittelt.

Die Radgeschwindigkeiten zu ermitteln ist relativ einfach und erfolgt zum Beispiel durch an den Rädern oder den entsprechenden Achsen angeordnete Umdrehungs- und/oder Geschwindigkeitssensoren. So kann davon ausgegangen werden, dass das Antriebsrad durchdreht, wenn es sich wesentlich schneller als ein nicht direkt vom Fahrzeugmotor angetriebenes Rad bewegt.

In einer weiteren besonderen Ausführungsform wird das Verfahren bevorzugt beim Anfahren des Fahrzeuges verwendet. Beim Anfahren des Fahrzeuges ist in der Regel ein Gang eingelegt, der ein hohes Drehmoment auf die Antriebsräder überträgt, z.B. der erste Gang. Durch dieses hohe Drehmoment und dem Wunsch des Fahrers das Fahrzeug zu beschleunigen, ist die Gefahr groß, dass die Antriebsräder durchdrehen, sodass gerade hier die Anwendung eines Verfahrens zweckdienlich ist, welches verhindert, dass die Antriebsräder durchdrehen.

Das eine Anfahrsituation vorliegt, kann zum Beispiel durch einen Geschwindigkeitssensor und/oder einen Beschleunigungssensor detektiert werden und so das Verfahren zur Verhinderung des Durchdrehens der Antriebsräder über eine elektronische Steuerung nur betätigt werden, wenn zuvor ein Fahrzeugstillstand vorgelegen hat.

In einer weiteren bevorzugten Ausführungsform wird im Doppelkupplungsgetriebe das Antriebsdrehmoment vom Antriebsmotor über den erstem Gang an das zumindest eine Antriebsrad angelegt. Währenddessen liegt der zweite Gang betriebsbereit im parallelen Getriebe des Doppelkupplungsgetriebes, sodass im Falle des Durchdrehens eines Antriebsrades vom ersten Gang auf den zweiten Gang gewechselt werden kann.

Dies verhindert, dass die Kraft, die über die Antriebsräder auch auf den Untergrund einwirken soll, nicht die Haftreibung des Untergrundes bzw. der Reifen überschreitet und somit die Räder nicht durchdrehen.

### Beschreibung bevorzugter Ausführungsbeispiele

Bevor die Erfindung im Detail beschrieben wird, ist darauf hinzuweisen, dass sie nicht die jeweiligen Verfahrensschritte beschränkt ist, da diese Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die vorliegende Erfindung wird im weiteren durch mehrere Zeichnungen näher erläutert, wobei die Zeichnungen keinesfalls eine Einschränkung des Schutzbereiches darstellen.

In den Zeichnungen zeigt

Figur 1 ein Diagramm verschiedener fahrzeugtypischer Parameter während des Durchdrehens eines Antriebsrads,

Figur 2 ein Diagramm verschiedener fahrzeugtypischer Parameter während des erfindungsgemäßen Verfahrens,

Figur 3 ein Flussdiagramm des erfindungsgemäßen Verfahrens.

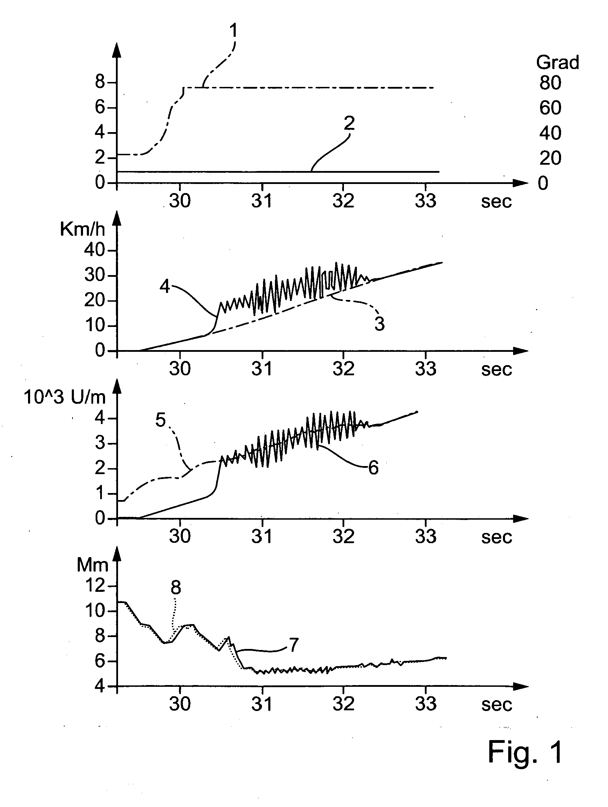

Linie 1 zeigt in Figur 1 die Stellung des Fahrpedals beim Anfahren, wobei das Fahrpedal bis zu seinem Maximum durchgedrückt wird. Die darunter liegende Linie 2 zeigt, dass während der ganzen Zeit im Getriebe der erste Gang eingelegt bleibt.

Das darunter liegende Diagramm zeigt mit Linie 3 die Geschwindigkeit der nicht direkt durch den Motor angetriebenen Räder und darüber mit Linie 4 die Geschwindigkeit der direkt durch den Motor angetriebenen Räder.

Darunter zeigt Linie 5 die Geschwindigkeit des Motors und Linie 6 die Geschwindigkeit der Antriebswelle. Darunter ist die wirkliche Stellung der Kupplung 7 und die Zielstellung der Kupplung 8 zu sehen.

Wie in Figur 1 gezeigt, wird bei konstant eingelegtem ersten Gang (2) und bei einem maximal betätigten Fahrpedal (1) sich die Geschwindigkeit der Antriebsräder (4) verschieden zu der Geschwindigkeit der nicht direkt von dem Antriebsmotor angetriebenen Räder (3) entwickeln. Die Antriebsräder drehen durch. Bei einem Durchdrehen der Antriebsräder wird die Geschwindigkeit der Antriebsräder (4) wesentlich höher und die Geschwindigkeit (4) beginnt stark zu oszillieren. Das selbe Verhalten zeigt dann auch die Eingangswelle (6), die direkt auf die Antriebsräder wirkt.

Die Geschwindigkeit der nicht direkt vom Fahrzeugmotor angetriebenen Räder (3) nimmt dabei konstant zu. Ein ähnliches Verhalten zeigt auch die Umdrehungsgeschwindigkeit des Motors (5).

Das Diagramm, das die Kupplungsstellung beschreibt (7), zeigt, dass die Kupplung während des Anfahrvorgangs geschlossen wird und auch während dem Durchdrehen der Räder zum größten Teil geschlossen ist.

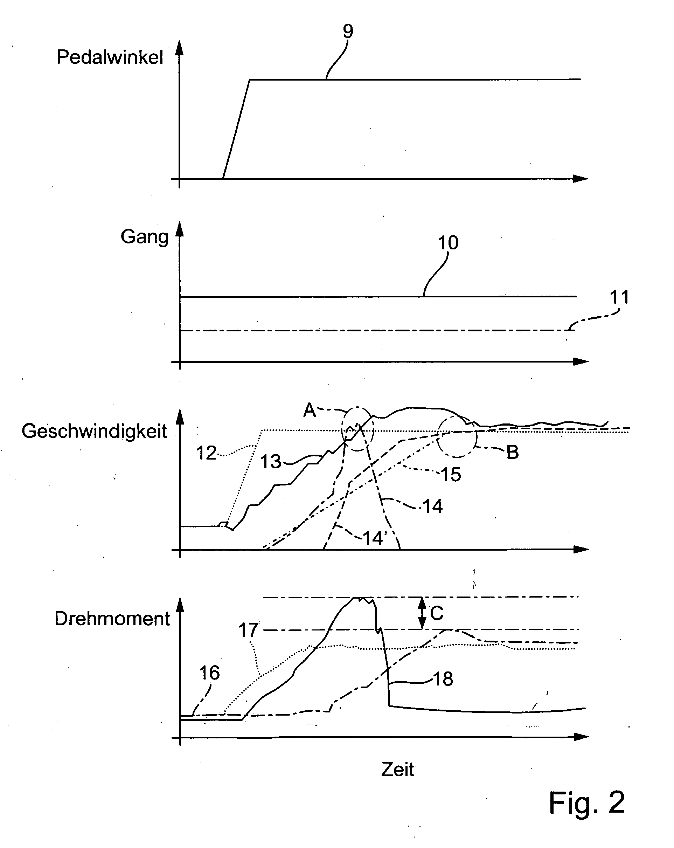

Figur 2 zeigt ebenfalls die Stellung des Fahrpedals (9) in dem ersten Diagramm, in dem zweiten Diagramm die beiden ersten Gänge (10, 11) (1. und 2. Gang), in dem dritten Diagramm die Zielgeschwindigkeit des Motors (12), die aktuelle Geschwindigkeit des Motors (13), die Antriebswellengeschwindigkeit mit dem zweiten Gang (14') und die Antriebswellengeschwindigkeit mit dem ersten Gang (14).

Die erwartete Geschwindigkeit der Eingangswelle, ohne dass das Antriebsrad durchdreht, ist mit 15 bezeichnet.

In einem dritten Diagramm ist das Drehmoment des Fahrzeugmotors (18), das Drehmoment der Ausgangwelle mit dem ersten Gang (17) und das Drehmoment der Ausgangswelle mit dem zweiten Gang (16) gezeigt.

Beim Anfahren wird die Zielgeschwindigkeit des Motors (12) gesetzt. Dies geschieht zum Beispiel durch das Niederdrücken des Fahrpedals durch den Fahrer.

Der erste Gang ist in dem Doppelkupplungsgetriebe eingelegt und die Kupplung, die mit diesem ersten Gang verbunden ist, wird geschlossen. Dadurch wird ein hohes Moment auf die Antriebswelle übertragen, worauf die Antriebsräder durchdrehen (A). Das Durchdrehen wird aufgrund der höheren Geschwindigkeit der Antriebsräder gegenüber den nicht angetriebenen Rädern und/oder der für das Durchdrehen charakteristische Oszillation der Geschwindigkeit erkannt. Um Fehleinschätzungen zu vermeiden, bei denen ein Durchdrehen der Räder angenommen wird, obwohl die Antriebsräder nicht durchdrehen, wird eine Schwelle eingeführt, die der Unterschied der Umdrehungsgeschwindigkeiten zwischen dem Antriebsrad und den nicht direkt angetriebenen Rädern überschreiten muss, damit ein Durchdrehen erkannt wird. Daraufhin wird die Kupplung, die funktionell mit dem zweiten Gang verbunden ist, langsam geschlossen, wobei die Kupplung zum ersten Gang geöffnet wird. Die Geschwindigkeit des Motors nimmt dadurch ab und ebenfalls das Drehmoment, das auf die Räder übertragen wird. An Punkt B ist die Kupplung, die dem zweiten Gang zugeordnet ist, geschlossen, der sogenannte Synchronisationspunkt erreicht.

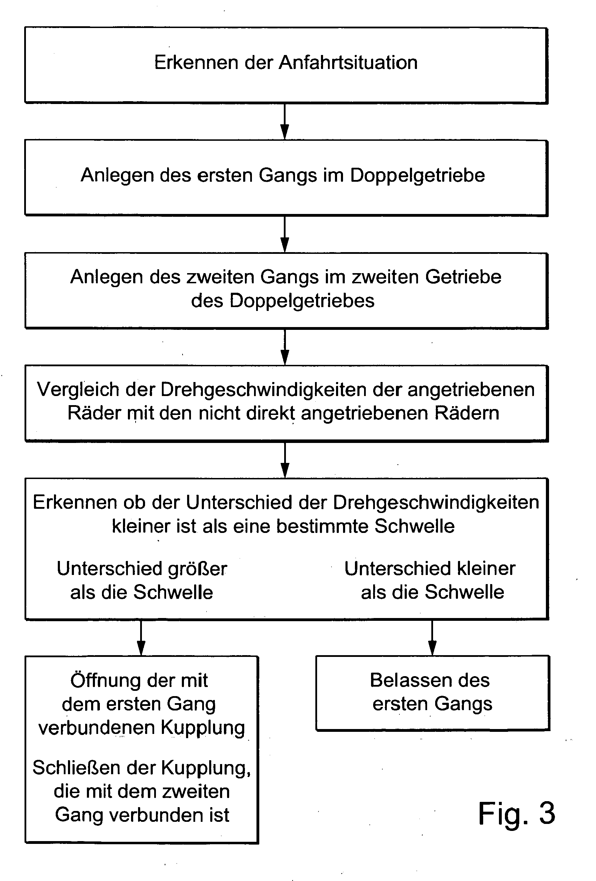

Figur 3 zeigt das Verfahren in einem Flussdiagramm. So wird in einem ersten Schritt ermittelt, ob es sich um eine Anfahrtssituation handelt. Ist dies der Fall, wird im ersten Getriebe des Doppelkupplungsgetriebes der erste Gang, im zweiten Getriebe der zweite Gang eingelegt. Die Kupplung, die den Antriebsmotor mit dem ersten Gang verbindet, wird geschlossen und so ein Drehmoment auf die Antriebsräder über den ersten Gang übertragen. Dabei wird die Geschwindigkeit der Antriebsräder mit der Geschwindigkeit der nicht direkt vom Fahrzeugmotor angetriebenen Räder bzw. die Oszillationen der Antriebsräder ermittelt und wenn diese Differenz einen bestimmten Schwellwert überschreitet, wird die Kupplung, die dem ersten Gang zugeordnet ist, geöffnet und die Kupplung, die dem zweiten Gang zugeordnet ist, geschlossen. So wird das Drehmoment, das auf die Räder wirkt verringert und ein Durchdrehen der Räder verhindert.

### Bezugszeichenliste

- 1: Fahrpedalwinkel
- 2.: Nummer des eingelegten Gangs
- 3.: Geschwindigkeit eines nicht direkt angetriebenen Rads
- 4.: Geschwindigkeit eines direkt angetriebenen Rads
- 5.: Geschwindigkeit des Motors
- 6.: Geschwindigkeit der Eingangswelle
- 7.: Aktuelle Kupplungsposition
- 8.: Zielposition der Kupplung
- 9.: Fahrpedalwinkel
- 10.: Eingelegter zweiter Gang des Doppelkupplungsgetriebes
- 11.: Eingelegter erster Gang des Doppelkupplungsgetriebes
- 12.: Zielgeschwindigkeit des Motors
- 13.: Geschwindigkeit des Motors
- 14.: Eingangswellengeschwindigkeit mit dem ersten Gang
- 14': Eingangswellengeschwindigkeit mit dem zweiten Gang
- 15.: Erwartete Eingangswellengeschwindigkeit ohne Durchdrehen
- 16.: Ausgangswellendrehmoment mit dem ersten Gang
- 17.: Ausgangswellendrehmoment mit dem zweiten Gang
- 18.: Drehmoment des Motors

- A.: Das Durchdrehen der Räder wurde ermittelt, die Kupplung zum ersten Gang wird geöffnet und die Kupplung zum zweiten Gang wird geschlossen
- B.: Synchronisierungspunkt
- C.: Aufgrund des Übersetzungsverhältnisses zwischen ersten und zweiten Gang ist das Drehmoment an der Ausgangswelle beim zweiten Gang reduziert.

## Patentansprüche

1. Verfahren um zumindest das Durchdrehen eines Antriebsrads eines Kraftfahrzeugs mit Doppelkupplungsgetriebe zu verhindern, umfassend die Verfahrensschritte:
- Einlegen oder Belassen eines Fahrgangs in einem ersten Getriebe des Doppelkupplungsgetriebes;
- Einlegen oder Belassen eines zum Fahrgang höheren Gang in einem zweiten Getriebe des Doppelkupplungsgetriebes;
- Erkennen, ob zumindest ein Antriebsrad durchdreht;
- Öffnen der Kupplung, die dem ersten Getriebe zugeordnet ist, in Abhängigkeit davon, ob ein Durchdrehen festgestellt wurde;
- Schließen der Kupplung, die dem zweiten Getriebe zugeordnet ist, in Abhängigkeit davon, ob ein Durchdrehen festgestellt wurde.

2. Verfahren nach dem vorhergehenden Anspruch, **dadurch gekennzeichnet, dass** das Verfahren beim Anfahren des Fahrzeugs angewendet wird.

3. Verfahren nach einem der vorhergehenden Ansprüche, **dadurch gekennzeichnet, dass** in dem ersten Getriebe der Gang eingelegt ist, der für das normale Anfahren vorgesehen ist, insbesondere der erste Gang.

4. Verfahren nach einem der vorhergehenden Ansprüche, **dadurch gekennzeichnet, dass** in dem zweiten Getriebe ein Gang eingelegt ist, der um eins höher ist als der Gang, der in dem ersten Getriebe eingelegt ist.

5. Verfahren nach einem der vorhergehenden Ansprüche, **dadurch gekennzeichnet, dass** das Durchdrehen des zumindest einen Antriebsrads durch einen Vergleich des Verhaltens des zumindest einen Antriebsrads mit den nicht direkt angetriebenen Rädern erkannt wird.

6. Verfahren nach dem vorhergehenden Anspruch, **dadurch gekennzeichnet, dass** das Durchdrehen durch den Vergleich der Geschwindigkeit des zumindest einen Antriebsrads mit zumindest einem nicht direkt angetriebenen Rad erkannt wird.

7. Verfahren nach dem vorhergehenden Anspruch, **dadurch gekennzeichnet, dass** ermittelt wird, ob die Umdrehungsgeschwindigkeit des Antriebsrades eine Oszillation zeigt und dass die Amplitude und/oder Frequenz dieser Oszillation herangezogen wird, zu entscheiden, ob das zumindest eine Antriebsrad durchdreht.
